# EUROPÄISCHE PATENTSCHRIFT

(11) **EP 3 431 320 B1**
(45) Veröffentlichungstag und Bekanntmachung des Hinweises auf die Patenterteilung: **24.03.2021**
(21) Anmeldenummer: 17182577.1
(22) Anmeldetag: 21.07.2017
(51) Int. Cl.: B60L 53/12, B60L 5/00

(54) **VERSORGUNG EINER FAHRWAGENKETTE MIT ELEKTRISCHER ENERGIE**
SUPPLYING FOR A VEHICLE CHAIN WITH ELECTRIC ENERGY
ALIMENTATION EN ÉNERGIE ÉLECTRIQUE D'UNE CHAÎNE DE CHARIOT MOTEUR

(43) Veröffentlichungstag der Anmeldung: 23.01.2019
(73) Patentinhaber: BEUMER Group GmbH & Co. KG, 59269 Beckum (DE)
(72) Erfinder: Kemker, Winfried, 48351 Everswinkel (DE); Sliwka, Martin, 59320 Ennigerloh (DE); Hilgenstock, Marc, 58730 Fröndenberg/Ruhr (DE)
(74) Vertreter: Philipp, Matthias

(56) Entgegenhaltungen:
- WO-A2-00/21351
- US-A- 6 087 806
- Anonymous: "Closed Bus", , 25 November 2020 (2020-11-25), XP055753764, Retrieved from the Internet: URL:https://www.onesteppower.com/closed-bu s [retrieved on 2020-11-25]
- Chris Wright: "The Closed Common DC Bus in Marine Power and Propulsion (Some Benefits and Difficulties)", , 1 December 2018 (2018-12-01), XP055753763, Retrieved from the Internet: URL:https://www.linkedin.com/pulse/closed- common-dc-bus-marine-power-propulsion-some -benefits-wright/ [retrieved on 2020-11-25]
- Stig Olav Settemsdal ET AL: "New Enhanced Safety Power Plant Solution for DP Vessels Operated in Closed Ring configuration. Return to Session Directory", DYNAMIC POSITIONING CONFERENCE, 15 October 2020 (2020-10-15), XP055753762, Retrieved from the Internet: URL:http://dynamic-positioning.com/proceed ings/dp2014/power_settemsdal.pdf [retrieved on 2020-11-25]

## Beschreibung

Die vorliegende Patentanmeldung bezieht sich auf ein System zur Versorgung einer Fahrwagenkette mit elektrischer Energie.

Fahrwagenketten sind miteinander gekoppelte Fahrwagen, die beispielsweise schienengebunden Stückgüter wie Pakete, Koffer, oder Gebinde transportieren können. Anstelle einer Schienenbindung kann sich eine Fahrwagenkette auch auf einem anderen fest definierten Fahrweg fortbewegen. Die Fortbewegung erfolgt über stationäre Antriebsmotoren oder Antriebsmotoren in den Fahrwagen. Auf dem Fahrwagen sind Lastaufnahmemittel angebracht, die durch Motoren angetrieben werden. Die Energieversorgung der Antriebsmotoren erfolgt über eine externe Energiequelle.

Aus der EP 2 921 431 B1 ist eine Fahrwagenreihe bekannt, die auf Fahrschienen fährt und mit Antriebsmotoren ausgestattet ist. Eine Energieversorgung erfolgt über Schleifkontakte oder auch induktive berührungslose Übertragung zwischen den Fahrwagen und einer außerhalb der Fahrwagen angeordneten Stromschiene.

In US 6087806 A ist vorgesehen, dass die einzelnen Fahrzeuge einer Fahrzeugkette hintereinander über jeweils einen positiv-poligen Leiter und einen negativ-poligen Leiter verbunden sind.

Der vorliegenden Erfindung liegt die Aufgabe zugrunde, eine kontinuierliche und stabile Energieversorgung der Fahrwagenkette zu gewährleisten.

Eine erste Ausführungsform der Erfindung betrifft ein System zur Energieversorgung einer Fahrwagenkette mit den Merkmalen des Anspruches 1. Weiter Ausgestaltungen ergeben sich aus den abhängigen Ansprüchen.

### KURZE BESCHREIBUNG DER ZEICHNUNGEN

- Figuren 1A, 1B und 1C: zeigen ein System gemäß Ausführungsformen der Erfindung.
- Figur 2: zeigt ein Schaltbild einer Fahrwagenkette gemäß Ausführungsformen der Erfindung.

### AUSFÜHRLICHE BESCHREIBUNG

Fahrwagenketten bestehen aus wenigstens zwei miteinander gekoppelten Fahrwagen, können in großen Systemen jedoch auch hunderte oder tausende Fahrwagen umfassen. Ein Fahrweg kann durch eine Schiene, auf der die Fahrwagen fahren, vorgegeben sein. Entlang des Fahrweges verläuft ein stationärer Energieleiter, hier auch als Primärleiter bezeichnet. Der Primärleiter kann beispielsweise Wechselstrom liefern und besteht aus wenigstens einem Segment,das sich nicht über den gesamten Fahrweg erstreckt. In einigen Ausführungsformen sind diese Segmente lediglich auf geraden Abschnitten des Fahrweges vorgesehen. Die Segmente sind vorzugsweise gerade. Die Segmente können von identischer Länge sein oder alternativ unterschiedliche Längen aufweisen. In bestimmten Ausführungsformen bestehen die Segmente aus einem Außenleiter und einem Innenleiter. Der Außenleiter besteht vorzugsweise aus Aluminium, der Innenleiter aus einzelisolierten Kupferlitzen.

Die Fahrwagen verfügen gemeinsam über eine geschlossene Busleitung, hier auch als Sekundärleiter bezeichnet. Es handelt sich um einen Powerbus, der mit Gleichstrom betrieben wird. An die Busleitung sind ein oder mehrere Übertragungsköpfe angeschlossen, hier auch als Pick-Ups bezeichnet, die an den Fahrwagen befestigt sind und den Sekundärleiter mit elektrischer Energie aus dem Primärleiter versorgen. Hierbei kann eine Umwandlung der elektrischen Energie durch die Übertragungsköpfe erfolgen, beispielsweise eine Umwandlung von Wechselstrom in Gleichspannung. Die Übertragungsköpfe sind vorzugsweise einheitlich gestaltet. Die elektrische Energie gelangt über den geschlossenen Powerbus zu jedem Fahrwagen und dient zur Versorgung von Antriebsmotoren der Fahrwagenkette und/oder der Lastaufnahmeelemente, die auf einigen oder auch allen Fahrwagen angebracht sind. Die Abstände zwischen den Segmenten des Primärleiters, die Anzahl dieser Segmente, die Anzahl der Übertragungsköpfe auf der Fahrwagenkette sowie die Abstände zwischen diesen Übertragungsköpfen sind beliebig wählbar. In einer besonderen Ausführungsform sind diese Parameter so aufeinander abgestimmt, dass die Fahrwagenkette während der Fahrt entlang des Fahrweges ständig mit wenigstens einem der Übertragungsköpfe in induktivem Kontakt mit einem der Segmente des Primärleiters steht. Der jeweils mit dem Primärleiter in Kontakt stehende Übertragungskopf kann sich dabei ändern, indem ein Übertragungskopf im Vorbeifahren den Kontakt zu einem Segment verliert und spätestens ab diesem Kontaktverlust wenigstens ein anderer Übertragungskopf in Kontakt mit einem der Segmente gerät.

Ausführungsformen der Erfindung betreffen vorzugsweise berührungslose Übertragung elektrischer Energie von dem Primärleiter zu dem Sekundärleiter, beispielsweise durch berührungslose Übertragung mittels Induktion. Bezugnahmen auf einen "Kontakt" zwischen Primärleiter und Übertragungskopf umfassen ausdrücklich auch solche berührungslosen Kontakte.

Die jeweils mit dem Primärleiter in Kontakt stehenden Übertragungsköpfe sind am Sekundärleiter parallelgeschaltet. In einer bevorzugten Ausführungsform wandeln die Übertragungsköpfe die jeweils anliegende Versorgungsspannung in eine Zielspannung für die geschlossene Busleitung um. Diese Zielspannung ist konstant und somit unabhängig von der sich ändernden Anzahl der Übertragungsköpfe, die in Kontakt mit dem Primärleiter stehen.

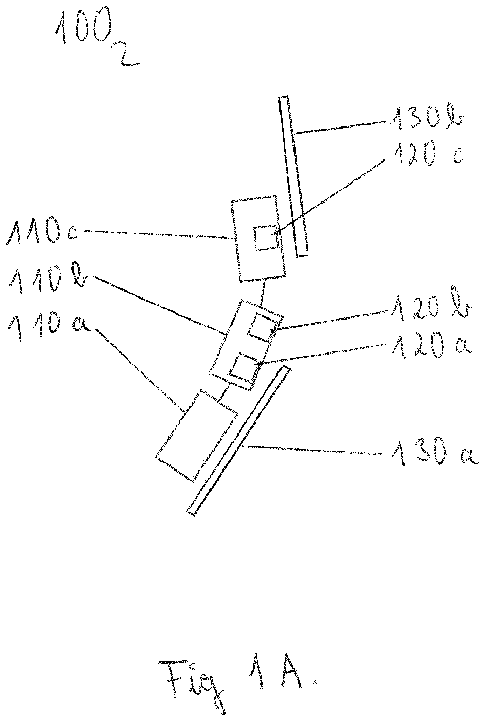

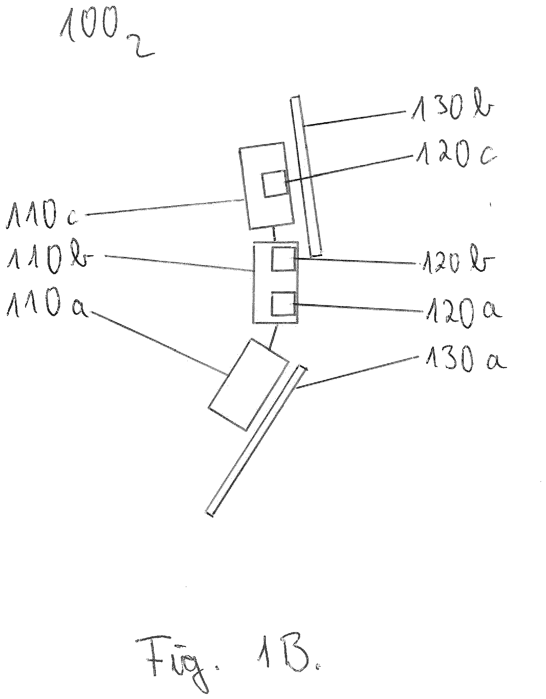

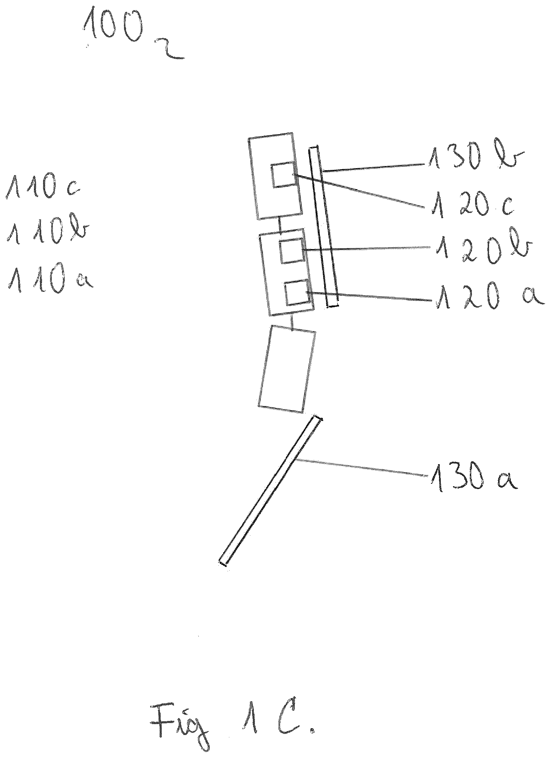

In Figur 1A ist beispielhaft ein erfindungsgemäßes System 100 zur Energieversorgung einer Fahrwagenkette 110 gezeigt. Das System 100 ist in einer Draufsicht gezeigt. Die beispielhafte Fahrwagenkette besteht aus drei Fahrwagen 110a, 110b, 110c, die miteinander gekoppelt sind und einen Fahrweg entlangfahren. Dieser Fahrweg ist durch einen Primärleiter angedeutet, der aus zwei beispielhaften Segmenten 130a und 130b besteht. Die Segmente 130a und 130b sind voneinander beabstandet. Fahrwagen 110c verfügt über einen Übertragungskopf 120c, der sich innerhalb eines vorbestimmten Abstandes von dem Segment 130b des Primärleiters 130 befindet und daher einen berührungslosen Kontakt zur Übertragung elektrischer Energie von dem Segment 130b zu dem Fahrwagen 110c herstellt. Fahrwagen 110b verfügt über zwei Übertragungsköpfe 120a und 120b, von denen lediglich Übertragungskopf 120a in Kontakt mit dem Primärleiter steht. Der Kontakt erfolgt über das Segment 130a. Fahrwagen 110a verfügt über keinerlei Übertragungskopf. Das in Figur 1A gezeigt System 100 umfasst in dieser Konstellation eine Parallelschaltung aus den Übertragungsköpfen 120a und 120c. Auf der Fahrwagenseite umfasst die Parallelschaltung eine Busleitung (nicht gezeigt). Figur 1 ist insofern beispielhaft, als dass die Anzahl der Fahrwagen, die Anzahl und Verteilung der Übertragungsköpfe sowie deren Kontakt mit Segmenten des Primärleiters variieren können.

Figur 1B zeigt das System 100 aus Figur 1A, nachdem die Fahrwagenkette 110 einen Abschnitt des Fahrweges zurückgelegt hat. Der Übertragungskopf 120c ist weiterhin in Kontakt mit dem Segment 130b. Der Übertragungskopf 120b des Fahrwagens 110b steht nunmehr in Kontakt mit dem Segment 130b, während der Übertragungskopf 120a nicht mehr mit dem Primärleiter in Kontakt steht. Das System 100 umfasst somit parallel geschaltete Übertragungsköpfe 120c und 120b.

Figur 1C zeigt das System 100, nachdem die Fahrwagenkette 110 einen weiteren Abschnitt des Fahrweges zurückgelegt hat. Alle Übertragungsköpfe 120a, 120b und 120c stehen nun in Kontakt mit dem Segment 130b des Primärleiters.

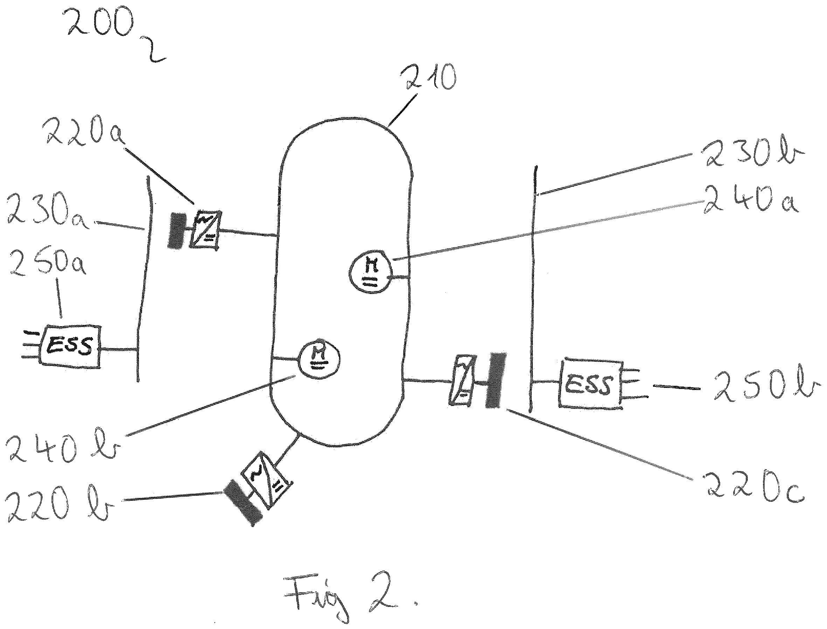

Figur 2 zeigt ein beispielhaftes Schaltbild 200 der Erfindung. An die geschlossene Busleitung 210 sind zwei beispielhafte Verbraucher 240a und 240b angeschlossen, beispielsweise Antriebsmotoren. Ferner sind beispielhafte Übertragungsköpfe 220a, 220b und 220c gezeigt. Jeder der Übertragungsköpfe 220a, 220b, 220c verfügt über einen induktiven Energiekoppler und ist einerseits mit der geschlossenen Busleitung 210 und andererseits mit Segmenten 230a und 230b eines Primärleiters gekoppelt, soweit eines der Segmente 230a und 230b innerhalb eines vorbestimmten Abstandes zu dem jeweiligen Übertragungskopf liegt. Jedes der Segmente 230a und 230b ist mit einer jeweiligen Energieversorgungsquelle 250a beziehungsweise 250b gezeigt. Die Energieversorgungsquellen 250a, 250b werden auch als Einspeisesteller (ESS) bezeichnet.

In der gezeigten Konstellation besteht ein Kontakt, beispielsweise ein berührungsloser Kontakt, zwischen Übertragungskopf 220a und Segment 230a sowie Übertragungskopf 220c und Segment 230b. Der Übertragungskopf 220b hingegen ist in Figur 2 nur elektrisch mit dem Sekundärleiter gekoppelt.

Die Erfindung bietet mehrere Vorteile. So erlaubt die Kombination aus Segmenten eines Primärleiters und Übertragungsköpfen einer Fahrwagenkette eine Gewichtsersparnis für die Fahrwagenkette, weil nicht jeder Fahrwagen über einen Übertragungskopf verfügen muss. Ein weiterer Vorteil ist, dass an bestimmten Stellen im Fahrweg, insbesondere in Kurven, auf den Primärleiter völlig verzichtet werden kann. Dadurch entfällt auch die Notwendigkeit, den Primärleiter an solchen Stellen zu montieren, was eine erhebliche Vereinfachung bei der Konstruktion der Fahrwagenkette und des Fahrweges darstellt. Auch reduziert die Erfindung den Planungsaufwand für Fahrwege, insbesondere für Primärleiter, erheblich. Darüber hinaus gewährleistet die Erfindung eine konstante Energieversorgung der geschlossenen Busleitung auf der Fahrwagenkette. Die Energieversorgung wird durch die induktive Kopplung der jeweils aktiven Übertragungsköpfe auf ein konstantes Niveau angeglichen. Im Gegensatz zum Stand der Technik können Leistungen, welche deutlich größer sind als die Nominalleistung eines einzelnen Übertragungskopfes aus dem geschlossenen Bussystem entnommen werden, was deutlich mehr Freiheitsgerade bei der Auslegung von Anlagen ermöglicht. Ferner lässt sich die geregelte DC-Spannung sehr viel leichter auf andere Spannungsniveaus durch Hoch- oder Tiefsetzsteller anpassen, so dass sich weitere Sonderapplikationen realisieren lassen. Insbesondere lassen sich monetäre Einsparungen realisieren durch das partielle Ausrüsten sowohl auf der stationären Seite (mindestens sämtliche Kurven werden nicht versorgt) als auch der mobilen Seite (Anzahl Übertragungsköpfe lässt sich deutlich reduzieren). Ein weiterer Vorteil ist der Entfall der nach dem Stand der Technik vorhandenen Restriktion bzgl. der maximalen Länge eines primären Segments.

Weitere Vorteile und Ausführungsformen sind aus den beigefügten Ansprüchen ersichtlich.

### Bezugszeichenliste

- 100: System zur Energieversorgung einer Fahrwagenkette
- 110: Fahrwagenkette
- 110a, 110b, 110c: Fahrwagen
- 120a, 120b, 120c: Übertragungsköpfe
- 130a, 130b, 230a, 230b: Segmente eines Primärleiters
- 200: Schaltbild
- 210: Busleitung
- 220a, 220b, 220c: Übertragungsköpfe
- 240a, 240b: Verbraucher
- 250a, 250b: Energieversorgungsquelle

## Patentansprüche

1. System (100) zur Energieversorgung einer Fahrwagenkette (110), umfassend:
eine Fahrwagenkette (110), bestehend aus wenigstens zwei miteinander gekoppelten Fahrwagen (110a, 110b, 110c), wobei die Fahrwagenkette (110) über einen geschlossenen Powerbus (210) verfügt, der mit Gleichstrom betrieben wird; und
einen stationären Energieleiter entlang eines Fahrweges der Fahrwagenkette (110), wobei der stationäre Energieleiter aus einem oder mehreren aufeinanderfolgenden Segmenten (130a, 130b, 230a, 230b) besteht, die voneinander beabstandet sind;
wobei der geschlossene Powerbus (210) mehrere Übertragungsköpfe (120a, 120b, 120c, 220a, 220b, 220c) aufweist, die eingerichtet sind, ohne Berührung mit dem stationären Energieleiter den geschlossenen Powerbus (210) mit elektrischer Energie aus dem stationären Energieleiter zu versorgen, wenn sie sich innerhalb eines vorbestimmten Abstands zu dem stationären Energieleiter befinden; und
wobei während einer Fahrt der Fahrwagenkette (110) entlang des Fahrweges zu jedem Zeitpunkt wenigstens einer der Übertragungsköpfe (120a, 120b, 120c, 220a, 220b, 220c) den geschlossenen Powerbus (210) mit elektrischer Energie aus dem stationären Energieleiter (130, 230) versorgt,
**dadurch gekennzeichnet, dass** der geschlossene Powerbus eine ringförmige Topologie aufweist.

2. System (100) nach Anspruch 1, wobei während der Fahrt der Fahrwagenkette (110) sämtliche jeweils mit dem stationären Energieleiter verbundenen Übertragungsköpfe (120a, 120b, 120c, 220a, 220b, 220c) mittels Energieübertragung eine konstante elektrische Gleichspannung für die geschlossene Busleitung (210) erzeugen.

3. System (100) nach Anspruch 1 oder 2, wobei die Übertragungsköpfe (120a, 120b, 120c, 220a, 220b, 220c) miteinander parallel geschaltet sind.

4. System (100) nach einem der Ansprüche 1 bis 3, wobei die Übertragung elektrischer Energie zwischen dem stationären Energieleiter und den Übertragungsköpfen (120a, 120b, 120c, 220a, 220b, 220c) mittels Induktion erfolgt.

5. System (100) nach einem der Ansprüche 1 bis 4, wobei wenigstens eine Kurve oder ein gerader Streckenabschnitt des Fahrweges keine Segmente des stationären Energieleiters enthält.

6. System (100) nach einem der Ansprüche 1 bis 5, wobei sich der geschlossene Powerbus (210) über sämtliche Fahrwagen (110a, 110b, 110c) der Fahrwagenkette (110) erstreckt.

7. System (100) nach einem der Ansprüche 1 bis 6, ferner umfassend einen oder mehrere Verbraucher (240a, 240b), die an den Fahrwagen (110a, 110b, 110c) angebracht und an den geschlossenen Powerbus (210) angeschlossen sind.

8. System (100) nach Anspruch 7, wobei die Verbraucher (240a, 240b) Antriebsmotoren zum Antrieb der Fahrwagenkette (110) und/oder der Lastaufnahmeelemente zur Aufnahme von Stückgut umfassen.

## Claims

1. A system (100) for supplying power to a chain (110) of driven carriages, comprising:
a chain (110) of driven carriages, consisting of at least two driven carriages (110a, 110b, 110c) coupled together, wherein the chain (110) of driven carriages has a closed power bus (210) which is operated with direct current; and
a stationary energy conductor along a path of travel of the chain (110) of driven carriages, wherein the stationary energy conductor consists of one or more successive segments (130a, 130b, 230a, 230b) which are spaced apart from one another;
wherein the closed power bus (210) has a plurality of transmission heads (120a, 120b, 120c, 220a, 220b, 220c) which are set up to supply the closed power bus (210) with electricity from the stationary energy conductor without contacting the stationary energy conductor if they are located within a predetermined distance from the stationary energy conductor; and
wherein during one journey of the chain (110) of driven carriages along the path of travel at each point in time at least one of the transmission heads (120a, 120b, 120c, 220a, 220b, 220c) supplies the closed power bus (210) with electricity from the stationary energy conductor (130, 230),
**characterised in that** the closed power bus has an annular topology.

2. A system (100) according to claim 1, wherein during the journey of the chain (110) of driven carriages all the transmission heads connected in each case to the stationary energy conductor (120a, 120b, 120c, 220a, 220b, 220c) generate a constant electrical DC voltage for the closed bus line (210) by means of energy transmission.

3. A system (100) according to claim 1 or 2, wherein the transmission heads (120a, 120b, 120c, 220a, 220b, 220c) are connected in parallel with each other.

4. A system (100) according to one of claims 1 to 3, wherein the transmission of electricity between the stationary energy conductor and the transmission heads (120a, 120b, 120c, 220a, 220b, 220c) takes place by means of induction.

5. A system (100) according to one of claims 1 to 4, wherein at least one curve or one straight section of the path of travel contains no segments of the stationary energy conductor.

6. A system (100) according to one of claims 1 to 5, wherein the closed power bus (210) extends over all the driven carriages (110a, 110b, 110c) of the chain (110) of driven carriages.

7. A system (100) according to one of claims 1 to 6, further comprising one or more consumers (240a, 240b) which are attached to the driven carriages (110a, 110b, 110c) and are connected to the closed power bus (210).

8. A system (100) according to claim 7, wherein the consumers (240a, 240b) comprise drive motors for driving the chain (110) of driven carriages and/or the load-carrying elements for receiving piece goods.

## Revendications

1. Un système (100) de fourniture d'un courant électrique à une chaîne (110) de wagons acheminés et ce système se compose des éléments suivants :
une chaîne (110) de wagons acheminés qui a au moins deux wagons acheminés (110a, 110b, 110c) raccordés les uns aux autres, et cette chaîne (110) de wagons acheminés a une barre bus en circuit fermé (210) qui fonctionne sur courant continu et
un conducteur stationnaire d'énergie le long d'une voie de déplacement de la chaîne (110) de wagons acheminés et ce conducteur stationnaire d'énergie comporte un ou plusieurs segments successifs (130a, 130b, 230a, 230b) qui sont espacés les uns par rapport aux autres, et
la barre bus en circuit fermé (210) a une pluralité de têtes de transmission (120a, 120b, 120c, 220a, 220b, 220c) qui sont programmées pour alimenter en électricité la barre bus en circuit fermé (210) à partir du conducteur stationnaire d'énergie, sans contacter le conducteur stationnaire d'énergie si elles sont implantées à une distance prédéterminée du conducteur stationnaire d'énergie, et
durant un parcours de la chaîne (110) de wagons acheminés le long de la voie de circulation, à chaque point temporel, au moins une des têtes de transmission (120a, 120b, 120c, 220a, 220b, 220c) alimente la barre bus en circuit fermé (210) en électricité en provenance du conducteur stationnaire d'énergie (130, 230),
**se caractérisant par le fait que** la barre bus en circuit fermé a une topologie annulaire.

2. Le système (100) que décrit la revendication 1, si ce n'est que, pendant le déplacement de la chaîne (110) de wagons acheminés, toutes les têtes de transmission raccordées, dans chaque cas, au conducteur stationnaire d'énergie (120a, 120b, 120c, 220a, 220b, 220c) produisent un courant électrique continu constant destiné à la ligne de la barre bus en circuit fermé (210), par le biais d'une transmission d'énergie.

3. Le système (100) que décrit la revendication 1 ou 2, si ce n'est que les têtes de transmission (120a, 120b, 120c, 220a, 220b, 220c) sont raccordées les unes aux autres en parallèle.

4. Le système (100) que décrit l'une ou l'autre des revendications 1 à 3, si ce n'est que la transmission d'électricité entre le conducteur stationnaire d'énergie et les têtes de transmission (120a, 120b, 120c, 220a, 220b, 220c) s'effectue par le biais d'une induction.

5. Le système (100) que décrit l'une ou l'autre des revendications 1 à 4, si ce n'est qu'au moins une courbe ou une ligne droite de la voie de circulation ne contient aucun segment du conducteur stationnaire d'énergie.

6. Le système (100) que décrit l'une ou l'autre des revendications 1 à 5, si ce n'est que la barre bus en circuit fermé (210) se prolonge sur la totalité des wagons acheminés (110a, 110b, 110c) de la chaîne (110) de wagons acheminés.

7. Le système (100) que décrit l'une ou l'autre des revendications 1 à 6, si ce n'est qu'il comporte, en outre, un ou plusieurs éléments consommateurs (240a, 240b) qui sont reliés aux wagons acheminés (110a, 110b, 110c) et sont rattachés à la barre bus en circuit fermé (210).

8. Le système (100) que décrit la revendication 7, si ce n'est que les éléments consommateurs (240a, 240b) comportent des moteurs de transmission qui entraînent la chaîne (110) de wagons acheminés et (ou) d'éléments de transport de charges pour la réception d'articles individuels.
